# FASCICULE DE BREVET EUROPEEN

(11) **EP 3 946 776 B1**
(45) Date de publication et mention de la délivrance du brevet: **07.06.2023**
(21) Numéro de dépôt: 20711990.0
(22) Date de dépôt: 24.03.2020
(51) Int. Cl.: B22C 9/22, B22C 7/02, B22C 9/10, B22C 21/14

(54) **DISPOSITIF DE MOULAGE**
FORMVORRICHTUNG
MOULDING DEVICE

(30) Priorité: 25.03.2019 FR 1903052
(43) Date de publication de la demande: 09.02.2022
(73) Titulaire: SAFRAN, 75015 Paris (FR)
(72) Inventeur: GRANGE, David, 77550 MOISSY-CRAMAYEL (FR); BOHLI, Ramzi, 77550 MOISSY-CRAMAYEL (FR)
(74) Mandataire: Regimbeau
(86) Numéro de dépôt international: PCT/EP2020/058207
(87) Numéro de publication internationale: WO 2020/193574

(56) Documents cités:
- EP-B1- 3 322 547
- WO-A1-2012/052665
- US-A1- 2013 333 855
- US-A1- 2019 030 592

## Description

### DOMAINE DE L'INVENTION ET ETAT DE LA TECHNIQUE

La présente invention concerne un dispositif de moulage, et plus particulièrement, un dispositif de moulage pour la fabrication d'éléments de turbomachine.

Traditionnellement, les aubes creuses de turbine, sont fabriquées en superalliage de nickel, par un procédé de fonderie à la cire perdue.

Dans le domaine du moulage, il est connu d'utiliser un noyau pour mouler un élément creux. Dans le cas, par exemple, de la fabrication d'aubes creuses, il est usuel d'utiliser un noyau en céramique autour duquel on injecte de la cire. La forme en cire ainsi moulée servira ensuite de modèle pour construire un moule en céramique (aussi appelé carapace) dans lequel sera moulée l'aube creuse.

Il est nécessaire que le noyau en céramique ait une forme au plus proche de la forme théorique estimée, car cela conditionne le respect dimensionnel de la future aube creuse.

Or, usuellement, du fait de la dispersion du procédé de fabrication du noyau, on observe souvent une variation de forme de l'ordre de plus ou moins 0,2mm.

Traditionnellement, la géométrie du noyau est contrôlée avec une machine de mesure tridimensionnelle (MMT). Puis, dans le dispositif d'injection, des appuis sur le noyau sont réglés pour contrer les dispersions de forme et déformer le noyau pour qu'il soit au plus proche de la forme théorique estimée. Cette méthode permet bien de compenser les déformations dues à la fabrication du noyau. Cependant durant le procédé d'injection, la cire exerce de nombreux efforts sur le noyau, qui tendent à déformer celui-ci, Or, la méthode connue de réglage des appuis nécessite l'immobilisation du dispositif de moulage et le contrôle du noyau avec une MMT pour repositionner les appuis.

Une autre solution consiste à maintenir le noyau en conditions d'hyperstatisme, dans le dispositif d'injection (i.e. avec un nombre d'appuis supérieur aux nombres de degrés de libertés). Cette disposition technique permet de sur-contraindre le noyau pour le déformer dans une forme géométrie proche de sa géométrie théorique. Cependant, le noyau est sur-contraint et présente un risque élevé de rupture. En outre, cette méthode ne permet pas, non plus, d'adapter la déformation du noyau aux contraintes exercées par la cire injectée.

Dans ce contexte technique, il est nécessaire de fournir un dispositif de moulage permettant de déformer le noyau en fonction de ses dispersions de fabrication, mais aussi en fonction des efforts exercés par la cire liquide ou pâteuse, sans risquer de casser le noyau.

US 2013/333855 A1 divulgue un dispositif et un procédé de cire perdue dans lequel l'outil de modèle ciré est flexible pour fournir un support conforme à un noyau en céramique et pour faciliter l'enlèvement de l'outil du modèle de cire coulée. Les broches de positionnement peuvent s'étendre depuis l'outil flexible pour établir un contact souple contre le noyau pendant l'étape d'injection de cire. Les broches peuvent coopérer avec un socle formé sur le noyau pour supporter le noyau le long de plusieurs axes pendant l'injection de la cire, permettant ainsi une pression d'injection de cire plus élevée sans endommager le noyau.

### PRESENTATION GENERALE DE L'INVENTION

Selon un premier aspect, l'invention concerne un dispositif de moulage pour mouler un matériau autour d'un noyau, comprenant une enceinte creuse de moulage adaptée pour recevoir le noyau, et des moyens de pilotage de la forme du noyau dans l'enceinte creuse. Les moyens de pilotage comprennent des moyens de déformation du noyau. De plus, les moyens de pilotage comprennent en outre des moyens de contrôle d'effort et une unité de commande adaptée pour actionner les moyens de déformation en fonction d'informations données par les moyens de contrôle d'effort.

D'une manière particulièrement avantageuse, les moyens de pilotage permettent une déformation dynamique du noyau en fonction des informations données par les moyens de contrôle. La déformation dynamique du noyau permet de maintenir le noyau dans une forme comprise dans les tolérances de fabrication, tout en minimisant les efforts appliqués sur le noyau. En d'autres termes, la déformation dynamique du noyau permet de modifier en temps réel la forme du noyau, en fonction des efforts qui lui sont appliqués, pour le contenir dans un intervalle dimensionnel acceptable. Il est remarquable que l'objectif de la déformation dynamique n'est pas nécessairement d'amener le noyau dans sa forme théorique, mais dans une forme contenue dans un intervalle dimensionnel. Cette différence permet de réduire les efforts appliqués au noyau tout en produisant un moulage conforme.

Ainsi, l'invention propose un dispositif de moulage permettant de déformer le noyau en fonction de ses dispersions de fabrication, mais aussi en fonction des efforts exercés par la cire liquide, sans risquer de casser le noyau.

Les moyens de contrôle peuvent comprendre au moins un capteur de force adapté pour mesurer un effort appliqué sur le noyau.

Les moyens de déformation peuvent permettre de déformer le noyau selon trois directions orthogonales de l'espace.

Les moyens de déformation peuvent permettre de déformer le noyau selon plusieurs directions combinées.

L'unité de commande peut être adaptée pour actionner les moyens de déformation de sorte à ce qu'une contrainte dans le noyau soit minimale tant que le noyau est conformé dans une position et une forme comprise dans des tolérances de fabrication prédéterminées.

Les moyens de déformation peuvent comprendre des portions d'appui sur le noyau servant de butée bloquant le noyau.

Les moyens de déformation peuvent comprendre des éléments mobiles d'appui sur le noyau permettant d'exercer une pression pour déformer le noyau.

Les moyens de déformation peuvent comprendre au moins deux éléments mobiles d'appui sur le noyau permettant d'exercer chacun une pression de sens opposé pour déformer le noyau. Selon un autre aspect, l'invention concerne un procédé de moulage utilisant un dispositif de moulage selon l'invention.

Le procédé de moulage peut comprendre une étape de déformation dynamique du noyau pour conformer le noyau dans une position et une forme comprise dans des tolérances de fabrication, en minimisant les contraintes appliquées sur le noyau.

Le procédé de moulage peut comprendre les étapes suivantes :
- modélisation du noyau,
- positionnement des portions d'appui sur le noyau pour maintenir le noyau,
- simulation numérique des efforts appliqués au noyau et des éventuels déformations et déplacement du noyau lors d'une phase d'injection de matière dans l'enceinte creuse comprenant le noyau,
- implémentation des résultats de la simulation numérique dans l'unité de commande,
- injection de matière dans l'enceinte creuse et déformation dynamique du noyau par des éléments mobiles d'appui.

L'étape de déformation dynamique du noyau peut comprendre, de manière redondante, les phases suivantes :
- détermination de la contrainte du noyau en fonction des efforts mesurés sur le noyau,
- déformation du noyau en fonction de la contrainte déterminée.

L'étape de modélisation du noyau peut comprendre une phase de mesure des dimensions du noyau pour obtenir un modèle du noyau présentant lesdites dimensions.

### DESCRIPTION DES FIGURES

D'autres caractéristiques et avantages de l'invention ressortiront encore de la description qui suit, laquelle est purement illustrative et non limitative, et doit être lue en regard des figures annexées sur lesquelles :
La figure 1 est une représentation schématique d'un dispositif selon l'invention ;
La figure 2 est une représentation schématique de la déformation dynamique d'un noyau.

### DESCRIPTION DETAILLEE DE L'INVENTION

### Architecture générale du dispositif

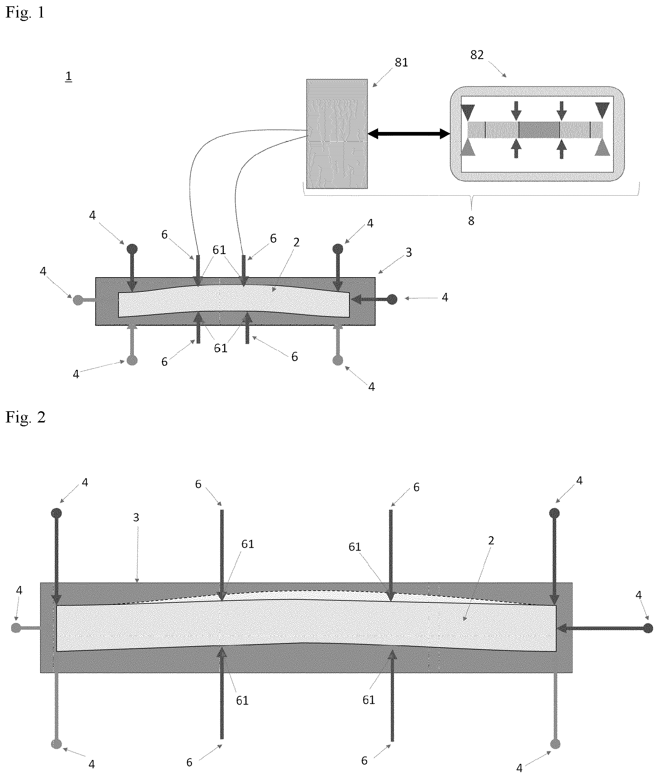

En référence à la figure 1, l'invention concerne un dispositif 1 de moulage pour mouler un matériau autour d'un noyau 2.

Il est précisé que le noyau 2 est un élément extérieur au dispositif 1. D'une manière classique, le noyau 2 utilisé peut être en céramique et présente la forme et les dimensions d'une cavité de la pièce finale qui sera moulée à la cire perdue.

Pour mémoire, il est rappelé que le moulage à la cire perdue consiste tout d'abord à obtenir un modèle en cire ayant la forme de la pièce finale à mouler (on comprendra que d'autres matières liquides peuvent être utilisées, mais par commodité dans la suite de la description on prendra l'exemple préféré de la cire). Traditionnellement l'opération est réalisée par surinjection de la cire autour du noyau céramique dans un moule en aluminium.

Puis, dans un second temps, le modèle en cire est moulé dans une carapace céramique (i.e. on forme la carapace céramique autour du modèle en cire). La cire est ensuite éliminée pour couler en lieu et place le métal en fusion (dans la carapace, autour du noyau). Le moule céramique est ensuite détruit et le noyau céramique extrait pour récupérer la pièce moulée.

Le présent dispositif 1 est celui pour l'obtention du modèle en cire, il comprend une enceinte creuse 3 de moulage et des moyens de pilotage de la forme du noyau dans l'enceinte creuse 3.

### Enceinte creuse

D'une manière connue, l'enceinte creuse 3 peut présenter au moins deux demi-coques présentant chacune une empreinte adaptée pour recevoir le noyau 2. L'enceinte creuse 3 peut être réalisée en aluminium ou en acier, ou en tout autre matériau adapté au moulage d'un modèle en cire.

La forme de l'enceinte creuse 3 est définie comme la forme externe de la pièce finale à mouler.

### Moyens de pilotage

Les moyens de pilotage comprennent des moyens de déformation du noyau, des moyens de contrôle d'effort et une unité de commande 8 adaptée pour actionner les moyens de déformation en fonction d'informations données par les moyens de contrôle d'effort et par un modèle de calcul implanté dans l'unité de commande 8.

Tel que cela sera décrit ultérieurement, d'une manière particulièrement avantageuse, les moyens de pilotage permettent une déformation dynamique du noyau en fonction des informations données par les moyens de contrôle.

Les moyens de déformation permettent de tenir et déformer le noyau 2, avantageusement selon deux voire trois directions orthogonales de l'espace le cas échéant combinées. En d'autres termes, les moyens de déformation permettent d'exercer des efforts de compression selon une direction ou plusieurs directions de l'espace, et permettent d'exercer aussi des efforts de flexion et de torsion.

Selon une disposition particulière, les moyens de déformation comprennent une pluralité de portions d'appui 4. On comprendra que selon une disposition préférentielle les portions d'appui 4 maintiennent le noyau 2 en conditions d'isostatisme de sorte le bloquer pour permettre sa déformation. Cependant, selon une autre disposition, les portions d'appui 4 peuvent assurer un maintien hypostatique du noyau 2, l'isostatisme étant alors attend grâce au maintien supplémentaire assuré par des éléments mobiles d'appui 6 (qui seront présentés ci-après). Selon le mode de réalisation schématisé, en deux dimensions, en figure 1, sont représentées six portions d'appuis 4 du dispositif 1.

Cependant, le dispositif 1 (qui s'étend en trois dimensions) présente de façon préférée douze portions d'appui 4 appairées pour bloquer les six degrés de libertés du noyau 2 dans l'enceinte creuse 3. Il est rappelé que conventionnellement, les six degrés de libertés correspondent, dans un repère orthogonal aux trois directions de translation selon chaque axe du repère, et aux trois rotations possibles autour de chaque axe dudit repère.

D'une manière particulièrement avantageuse, les portions d'appui 4 sont des appuis ponctuels. En outre, les moyens de déformation comprennent des éléments mobiles d'appui 6 permettant d'exerce un effort variable et piloté sur le noyau 2 pour le déformer.

D'une manière préférentielle, les éléments mobiles d'appui 6 sont des appuis ponctuels.

Les moyens de contrôle comprennent plusieurs capteurs de force 61 adaptés pour mesurer des efforts sur le noyau 2 (i.e. des efforts « exercés » par le noyau 2 sur les capteurs de force 61. Les efforts mesurés résultent de la contrainte interne causée par les efforts appliqués par les éléments mobiles d'appui 6, et lors de l'injection, par la matière liquide de type cire). D'une manière connue les capteurs de force peuvent être, par exemple, des cellules piézo-électriques ou des dynamomètres.

D'une manière particulièrement avantageuse, les capteurs de force 61 peuvent être intégrés aux éléments mobiles d'appui 6.

Les moyens de contrôle et les moyens de déformation sont pilotés par une unité de commande 8. Tel que schématisé sur la figure 1, l'unité de commande 8 peut comprendre une unité de traitement 81 et une unité d'affichage 82. L'unité de commande 8 peut être un ordinateur personnel ou une interface homme-machine comprenant au moins : un processeur, des moyens d'affichage et des actionneurs (boutons, molettes, etc.).

L'unité de commande 8 est avantageusement configurée pour calculer à partir des informations fournis par les capteurs de force 61 ladite contrainte dans le noyau 2 (causée par les efforts appliqués sur le noyau 2).

Une telle configuration permet d'ajuster les efforts appliqués sur le noyau 2 par les moyens de déformation de sorte à éviter tout risque de rupture. Plus précisément, l'unité de commande 8 est préférentiellement adaptée pour actionner les moyens de déformation de sorte à ce que la contrainte dans le noyau 2 soit inférieure à un seuil prédéterminé (typiquement seuil de rupture moins une marge), voire minimale tant que le noyau 2 est conformé dans une position et une forme comprise dans des tolérances de fabrication prédéterminées (voir plus loin).

### Procédé

L'invention concerne aussi un procédé de moulage utilisant le dispositif 1 de moulage selon l'invention.

Selon une disposition particulière, le procédé de moulage peut comprendre les étapes suivantes :
- modélisation du noyau 2,
- positionnement des portions d'appui 4 sur le noyau 2 pour le maintenir,
- simulation numérique des efforts appliqués au noyau 2 et des éventuels déformations et déplacement du noyau 2 lors d'une phase d'injection de matière dans l'enceinte creuse comprenant le noyau 2,
- implémentation des résultats de la simulation numérique dans l'unité de commande 8,
- injection de matière (de type cire) dans l'enceinte creuse 3 et déformation dynamique du noyau 2 par des éléments mobiles d'appui 6.

D'une manière particulièrement avantageuse, l'étape de modélisation du noyau 2 peut comprendre une phase de mesure des dimensions du noyau 2 pour obtenir un modèle du noyau 2 présentant lesdites dimensions. La mesure des dimensions du noyau 2 peut par exemple être réalisée à l'aide d'une machine de mesure tridimensionnelle (MMT).

La simulation numérique des efforts appliqués au noyau 2 est réalisée en utilisant un modèle de calcul permettant de prédire les contraintes associées aux déformations en calculant les champs de contraintes σᵢ, où i varie de 1 à n (avec n le nombre d'éléments mobiles d'appui 6).

D'une manière préférentielle l'hypothèse principale, dudit modèle, est que le noyau a un comportement élastique linéaire, ce qui est très proche de la réalité pour un matériau céramique avant la rupture. On fait également l'hypothèse que les différents éléments mobiles d'appui 6 sont en contact avec le noyau 2. Avec de telles hypothèses, le problème mécanique est dit linéaire. Cela peut être traduit de la façon suivante :
Soit σ(x) le champ du tenseur des contraintes dans le noyau 2 céramique.
Soit F₁, ..., Fₙ la valeur des forces mesurées au niveau des différents capteurs des points de contact mobiles.
Soit σᵢ (x) la valeur du champ du tenseur des contraintes, pour une valeur Fᵢ unitaire et des valeurs Fⱼ=0 pour j différent de i.

Alors, pour une combinaison (F₁,...,Fₙ), la valeur du champ des contraintes vaut : σ(x)=∑ᵢFᵢσᵢ(x)

Dans ces conditions, on peut suivre le processus suivant. Lors de la conception d'un noyau 2, celui-ci est modélisé par un logiciel de Conception Assistée par Ordinateur (CAO), et la position des points de contact entre le noyau 2 (points d'appui 4 et éléments mobiles d'appui 6) et l'enceinte creuse 3 sont figés. On peut alors réaliser en amont de l'utilisation du dispositif plusieurs calculs élastiques pour calculer les champs de contraintes σᵢ. Dans un exemple où il y aurait six éléments mobiles d'appui 6, cela revient à effectuer six calculs. Ensuite, les champs de contraintes des résultats σᵢ peuvent être chargés sur l'unité de traitement 81 de l'unité de commande 8. Lors de l'utilisation du dispositif, les valeurs Fᵢ sont mesurées par les capteurs de force 61 et transmises en temps réel à l'unité de traitement 81. Pour connaître le champ de contraintes, l'unité de traitement 81 doit seulement réaliser une somme (équation ci-dessus), ce qui peut être fait en temps réel, et afficher le résultat avec l'unité d'affichage 82. Ce genre d'opération peut être fait avec des outils disponibles sur le marché, ou par un outil de visualisation développé spécifiquement pour cette application.

Il est précisé que par « dynamique », on entend que la déformation peut varier en temps réel pendant l'injection de matière de sorte à ajuster les efforts appliqués sur le noyau 2 (la matière injectée modifie ces efforts).

Tel que schématisée sur la figure 2, l'étape de déformation dynamique du noyau 2 permet de conformer le noyau 2 dans une position et une forme comprise dans des tolérances de fabrication, en minimisant les contraintes dans le noyau. En d'autres termes, l'étape de déformation dynamique n'a pas pour objectif de ramener le noyau 2 dans sa forme théorique idéale, mais de le déformer pour le contenir dans un intervalle dimensionnel acceptable. Il s'agit là d'une disposition technique particulièrement avantageuse permettant de réaliser un moulage conforme tout en fatiguant au minimum le noyau 2.

En résumé, l'unité de commande 8 n'est pas configurée pour conformer le noyau 2 dans sa position et sa forme théoriques idéales, mais dans la position et la forme, parmi celles comprises dans des tolérances de fabrication, qui minimise les contraintes dans le noyau 2.

Il est remarquable que l'étape de déformation dynamique du noyau 2 peut comprendre, de manière itérée, les phases suivantes :
- détermination d'une contrainte dans le noyau 2 en fonction des efforts mesurés sur le noyau 2
- déformation du noyau 2 en fonction de la contrainte déterminée.

Ainsi, l'étape de déformation dynamique peut être réalisée en continu durant toute l'étape d'injection de cire dans l'enceinte creuse 3.

En d'autres termes, durant toute l'étape d'injection de cire dans l'enceinte creuse 3, les moyens de contrôle signalent les efforts exercés sur le noyau 2 et l'unité de commande 8 pilote, en continu les moyens de déformation pour ajuster - en continu - la forme du noyau 2. Il s'agit là d'une disposition technique particulièrement avantageuse par rapport aux dispositifs connus qui ne permettent pas un pilotage en continu avec une boucle de contrôle par des capteurs de force 61.

Ainsi, l'invention propose un dispositif 1 de moulage permettant de déformer le noyau 2 en fonction de ses dispersions de fabrication, mais aussi en fonction des efforts exercés par la cire liquide, sans risquer casser le noyau 2.

## Revendications

1. Dispositif (1) de moulage pour mouler un matériau autour d'un noyau (2), comprenant une enceinte creuse (3) de moulage adaptée pour recevoir le noyau (2), et des moyens de pilotage de la forme du noyau (2) dans l'enceinte creuse (3), les moyens de pilotage comprenant des moyens de déformation du noyau (2), le dispositif (1) de moulage est **caractérisé en ce que** les moyens de pilotage comprennent en outre des moyens de contrôle d'effort et une unité de commande (8) adaptée pour actionner les moyens de déformation en fonction d'informations données par les moyens de contrôle d'effort.

2. Dispositif (1) de moulage selon la revendication 1, dans lequel, les moyens de contrôle comprennent au moins un capteur de force (6) adapté pour mesurer un effort appliqué sur le noyau (2).

3. Dispositif (1) de moulage selon l'une des revendications 1 ou 2, dans lequel les moyens de déformation permettent de déformer le noyau (2) selon trois directions orthogonales de l'espace.

4. Dispositif (1) de moulage selon l'une des revendications 1 à 3, dans lequel l'unité de commande 8 est adaptée pour actionner les moyens de déformation de sorte à ce qu'une contrainte dans le noyau 2 soit minimale tant que le noyau 2 est conformé dans une position et une forme comprise dans des tolérances de fabrication prédéterminées.

5. Dispositif (1) de moulage selon l'une des revendications 1 à 4, dans lequel les moyens de déformation comprennent des portions d'appui (4) sur le noyau (2) servant de butée bloquant le noyau (2).

6. Dispositif (1) de moulage selon l'une des revendications 1 à 5, dans lequel les moyens de déformation comprennent des éléments mobiles d'appui (6) sur le noyau (2) permettant d'exercer une pression pour déformer le noyau (2).

7. Dispositif (1) de moulage selon la revendication 6, dans lequel les moyens de déformation comprennent au moins deux éléments mobiles d'appui (6) sur le noyau (2) permettant d'exercer chacun une pression de sens opposé pour déformer le noyau (2).

8. Procédé de moulage utilisant un dispositif (1) selon l'une quelconque des revendications 1 à 7.

9. Procédé de moulage selon la revendication 8 comprenant une étape de déformation dynamique du noyau (2) pour conformer le noyau (2) dans une position et une forme comprise dans des tolérances de fabrication prédéterminées, en minimisant les contraintes appliquées sur le noyau (2).

10. Procédé de moulage selon l'une des revendications 8 ou 9 comprenant les étapes suivantes :
- modélisation du noyau (2),
- positionnement des portions d'appui (4) sur le noyau (2) pour maintenir le noyau (2),
- simulation numérique des efforts appliqués au noyau (2) et des éventuels déformations et déplacement du noyau (2) lors d'une phase d'injection de matière dans l'enceinte creuse (3) comprenant le noyau (2),
- implémentation des résultats de la simulation numérique dans l'unité de commande (8),
- injection de matière dans l'enceinte creuse (3) et déformation dynamique du noyau (2) par des éléments mobiles d'appui (6).

11. Procédé selon l'une des revendications 8 ou 9, dans lequel l'étape de déformation dynamique du noyau (2) comprend, de manière itérée, les phases suivantes :
- détermination de la contrainte du noyau (2) en fonction des efforts mesurés sur le noyau (2),
- déformation du noyau (2) en fonction de la contrainte déterminée.

12. Procédé selon l'une des revendications 9 à 10, dans lequel l'étape de modélisation du noyau (2) comprend une phase de mesure des dimensions du noyau (2) pour obtenir un modèle du noyau (2) présentant lesdites dimensions.

## Patentansprüche

1. Vorrichtung (1) zum Formen eines Materials um einen Kern (2) herum, mit einer hohlen Formkammer (3), die zur Aufnahme des Kerns (2) geeignet ist, und mit Mitteln zur Steuerung der Form des Kerns (2) in der hohlen Kammer (3), wobei die Steuerungsmittel Verformungsmittel zur Verformung des Kerns (2) umfassen, die Vorrichtung (1) zum Formen **dadurch gekennzeichnet ist, dass** die Steuerungsmittel außerdem Kraftkontrollmittel und eine Steuereinheit (8) umfassen, die so ausgelegt ist, dass sie die Verformungsmittel in Abhängigkeit von Informationen, die von den Kraftkontrollmitteln gegeben werden, betätigt.

2. Vorrichtung (1) zum Formen nach Anspruch 1, wobei die Kraftkontrollmittel mindestens einen Kraftsensor (6) umfassen, der so beschaffen ist, dass er eine auf den Kern (2) ausgeübte Kraft misst.

3. Vorrichtung (1) zum Formen nach einem der Ansprüche 1 oder 2, bei der die Verformungsmittel es ermöglichen, den Kern (2) in drei orthogonalen Raumrichtungen zu verformen.

4. Vorrichtung (1) zum Formen nach einem der Ansprüche 1 bis 3, wobei die Steuereinheit 8 dazu ausgelegt ist, die Verformungsmittel so zu betätigen, dass eine Spannung in dem Kern 2 minimal ist, solange der Kern 2 in einer Position und Form innerhalb vorbestimmter Fertigungstoleranzen geformt wird.

5. Vorrichtung (1) zum Formen nach einem der Ansprüche 1 bis 4, wobei die Verformungsmittel Auflageabschnitte (4) auf dem Kern (2) umfassen, die als Anschlag dienen, der den Kern (2) blockiert.

6. Vorrichtung (1) zum Formen nach einem der Ansprüche 1 bis 5, bei der die Verformungsmittel bewegliche Elemente (6) zum Abstützen auf dem Kern (2) umfassen, die es ermöglichen, einen Druck auszuüben, um den Kern (2) zu verformen.

7. Vorrichtung (1) zum Formen nach Anspruch 6, bei der die Mittel zum Verformen mindestens zwei bewegliche Elemente (6) zum Abstützen auf dem Kern (2) umfassen, die es ermöglichen, jeweils einen Druck in entgegengesetzter Richtung auszuüben, um den Kern (2) zu verformen.

8. Formverfahren unter Verwendung einer Vorrichtung (1) nach einem der Ansprüche 1 bis 7.

9. Formverfahren nach Anspruch 8, umfassend einen Schritt des dynamischen Verformens des Kerns (2), um den Kern (2) in eine Position und Form innerhalb vorbestimmter Fertigungstoleranzen zu formen, indem die auf den Kern (2) ausgeübten Spannungen minimiert werden.

10. Formverfahren nach einem der Ansprüche 8 oder 9, umfassend die folgenden Schritte :
- Modellieren des Kerns (2),
- Positionierung der Stützabschnitte (4) auf dem Kern (2), um den Kern (2) zu halten,
- Numerische Simulation der auf den Kern (2) ausgeübten Kräfte und der möglichen Verformungen und Verschiebungen des Kerns (2) während einer Phase des Einspritzens von Material in die den Kern (2) umfassende hohle Kammer (3),
- Implementierung der Ergebnisse der numerischen Simulation in die Steuereinheit (8),
- Einspritzen von Material in die hohle Kammer (3) und dynamische Verformung des Kerns (2) durch bewegliche Stützelemente (6).

11. Verfahren nach einem der Ansprüche 8 oder 9, wobei der Schritt des dynamischen Verformens des Kerns (2) iterativ die folgenden Phasen umfasst:
- Bestimmen der Spannung des Kerns (2) in Abhängigkeit von den am Kern (2) gemessenen Kräften,
- Verformung des Kerns (2) in Abhängigkeit von der ermittelten Spannung.

12. Verfahren nach einem der Ansprüche 9 bis 10, wobei der Schritt des Modellierens des Kerns (2) eine Phase des Messens der Abmessungen des Kerns (2) umfasst, um ein Modell des Kerns (2) mit den genannten Abmessungen zu erhalten.

## Claims

1. A molding device (1) for molding a material around a core (2), comprising a hollow molding enclosure (3) adapted to receive the core (2), and means for controlling the shape of the core (2) in the hollow enclosure (3), the controlling means comprising means for deforming the core (2), the molding device (1) being **characterized in that** the means for controlling further comprise force control means and a control unit (8) adapted to actuate the deformation means as a function of information given by the force control means.

2. The molding device (1) according to claim 1, wherein, the control means comprise at least one force sensor (6) adapted to measure a force applied to the core (2).

3. The molding device (1) according to any of claims 1 or 2, wherein the means for deforming allow the core (2) to be deformed along three orthogonal directions of space.

4. The molding device (1) according to any of claims 1 to 3, wherein the control unit (8) is adapted to operate the means for deforming so that a stress in the core 2 is minimal as long as the core 2 is shaped in a position and shape within predetermined manufacturing tolerances.

5. The molding device (1) according to one of claims 1 to 4, in which the means for deforming comprise bearing portions (4) on the core (2) serving as a stop blocking the core (2).

6. The molding device (1) according to one of claims 1 to 5, in which the means for deforming comprise movable elements (6) for bearing on the core (2) allowing pressure to be exerted to deform the core (2).

7. The molding device (1) according to claim 6, in which the means for deforming comprise at least two movable elements (6) for bearing on the core (2), each of which is capable of exerting pressure in opposite directions to deform the core (2).

8. A molding process using a device (1) according to any one of claims 1 to 7.

9. The molding process of claim 8 comprising a step of dynamically deforming the core (2) to conform the core (2) to a position and shape within predetermined manufacturing tolerances, minimizing stresses applied to the core (2).

10. The molding process according to any of claims 8 or 9 comprising the following steps:
- modeling the core (2),
- positioning of the support portions (4) on the core (2) to hold the core (2)
- numerical simulation of the forces applied to the core (2) and of the possible deformations and displacements of the core (2) during a phase of injection of material into the hollow molding enclosure (3) comprising the core (2),
- implementation of the results of the numerical simulation in the control unit (8),
- injecting material into the hollow molding enclosure (3) and dynamically deforming the core (2) by means of movable support elements (6).

11. The process according to any of claims 8 or 9, wherein the step of dynamic deformation of the core (2) comprises, in an iterated manner, the following steps:
- determining the stress of the core (2) as a function of the forces measured on the core (2),
- deformation of the core (2) as a function of the determined stress.

12. The process according to any of claims 9 to 10, wherein the step of modeling the core (2) comprises a phase of measuring the dimensions of the core (2) to obtain a model of the core (2) having said dimensions.
